# EUROPÄISCHE PATENTSCHRIFT

(11) **EP 1 857 305 B1**
(45) Veröffentlichungstag und Bekanntmachung des Hinweises auf die Patenterteilung: **03.07.2013**
(21) Anmeldenummer: 07008643.4
(22) Anmeldetag: 27.04.2007
(51) Int. Cl.: B60G 17/019, F16F 9/05, G01S 13/75

(54) **Luftgefedertes Fahrwerk mit Niveau-Meßeinrichtung bestehend aus Sensoreinheit und Transponder**
Air spring suspension with transponder and sensor to determine height
Suspension pneumatique avec transpondeur et capteur pour déterminer la hauteur

(30) Priorität: 15.05.2006 DE 102006022934
(43) Veröffentlichungstag der Anmeldung: 21.11.2007
(73) Patentinhaber: BPW Bergische Achsen KG, 51674 Wiehl (DE)
(72) Erfinder: Ebert, Jörg, 50858 Köln (DE); Walter, Bernhard, 58553 Halver (DE)
(74) Vertreter: Christophersen, Ulrich Rudolf

(56) Entgegenhaltungen:
- EP-A1- 0 924 115
- WO-A-99/40704
- WO-A-2006/073717
- DE-A1- 10 025 631
- DE-A1- 10 326 675
- DE-C1- 19 701 530

## Beschreibung

Die Erfindung betrifft ein luftgefedertes Fahrwerk mit einem eine Fahrzeugachse führenden, gegenüber einem Fahrzeugchassis angelenkten Achslenker, sowie einer aus mindestens einer aktiven Sensoreinheit und einem passiven Element zusammengesetzten Niveau-Meßeinrichtung zur Bestimmung eines Abstandes zwischen Fahrwerk und Fahrzeugchassis, wobei entweder das passive Element an dem Fahrwerk und die aktive Sensoreinheit an dem Fahrzeugchassis oder umgekehrt, angeordnet ist, das passive Element ein im magnetischen Wechselfeld der aktiven Sensoreinheit angeordneter und aus diesem mit Energie versorgter Transponder ist, und dass die Sensoreinheit umfasst:
- ein Transponder-Lesemodul zur Bestimmung der Feldstärke, mit der der Transponder auf eine Anfrage der aktiven Sensoreinheit antwortet oder mit der die Anfrage der aktiven Sensoreinheit bei dem Transponder ankommt,
- ein Auswertemodul zur Generierung einer Abstandsinformation aus der von dem Transponder-Lesemodul empfangenen Feldstärke.

Luftgefederte Fahrzeugachsen haben weite Verbreitung im Schwerlastbereich, beispielsweise bei Anhängerfahrzeugen oder Sattelaufliegern. Die Luftfeder ist mit ihrem einen Ende über einen luftdichten Deckel am Chassis des Fahrzeuges festgelegt, und mit ihrem anderen Ende über einen Tauchkolben gegenüber der Fahrzeugachse oder dem die Fahrzeugachse führenden Achslenker abgestützt. Das federnde Volumen wird von einem flexiblen Luftbalg umschlossen, welcher in Gestalt eines Rollbalgs den Deckel und den Tauchkolben miteinander verbindet. Die in dem federnden Volumen zusammengeschlossene Druckluft vermag das Fahrzeug gegen Stöße aufgrund z.B. von Fahrbahnunebenheiten abzufedern. Des weiteren ist über die Steuerung des Drucks in der Luftfeder eine Niveauregulierung oder -anpassung möglich. Hierbei bestimmt die Einfederung der Luftfeder, d.h. der vertikale Abstand zwischen dem Deckel und dem Tauchkolben der Luftfeder, die Fahrhöhe des Fahrzeugs, worunter der Abstand des Fahrzeugchassis gegenüber der Fahrbahn bezeichnet wird. Beim Beladen des Fahrzeugs wird durch das Gewicht der Zuladung die Luft innerhalb des Druckraums komprimiert, wodurch das Niveau der Fahrhöhe abnimmt.

Um die Fahrhöhe ermitteln zu können, ist in Verbindung mit Luftfedern die Verwendung von Abstands-Messvorrichtungen bekannt. Auf Grundlage der gewonnenen Istwerte erfolgt über eine Drucksteuerung der Luftfederung eine Nachstellung bis zum Erreichen der vorbestimmten Soll-Fahrhöhe.

Bekannt sind zu diesem Zweck z.B. taktile Messvorrichtungen, die nach dem resistiven Prinzip über einen mechanischen Wegaufnehmer den Abgriff an einem Potentiometer ändern und so die Bewegungen des Tauchkolbens in eine Änderung des ohmschen Widerstandes überführen. Bei solchen Messvorrichtungen hat sich der mechanische Abgriff aufgrund des mit diesem verbundenen Reibverschleißes über die Lebensdauer der Luftfedern als nachteilig erwiesen.

Ferner sind kapazitiv arbeitende Systeme bekannt, bei denen die vertikale Bewegung des Tauchkolbens zu einer Relativverschiebung zweier Kondensatorplatten eines Plattenkondensators führt. Über die resultierende Änderung der Kondensatorkapazität lässt sich die Fahrhöhe errechnen. Bei solchen Systemen hat sich die elektrische Kontaktierung der sich gegeneinander bewegenden Platten des Kondensators als nachteilig erwiesen. Auch haben sich diese Systeme bei größeren zu sensierenden Abständen als störanfällig erwiesen.

Auch induktive Systeme haben sich als störanfällig erwiesen, bei denen ein Spulensystem vorgesehen ist, in dem ein elektrisch leitfähiger Anker bewegt und über die resultierende Änderung der Induktivität der Abstand bestimmt wird. Die Messwerte können durch metallische Gegenstände im magnetischen Feld der Spule verfälscht werden.

Aus der EP 0 828 087 B1 ist eine Luftfeder mit Messvorrichtung bekannt, bei der eine erste Sensoreinheit am Rollbalg, und eine zweite Sensoreinheit außen am Tauchkolben befestigt ist. Wenn sich im Fahrbetrieb an der Außenseite des Tauchkolbens z.B. Staub oder Öl ablagert, so kann dies die Messergebnisse stören bzw. verfälschen.

Aus der DE 100 23 622 B4 ist eine Luftfeder mit integriertem Niveausensor bekannt, bei der die Abstandsbestimmung mit Hilfe eines Magnetfeldsensors erfolgt, der die Stärke eines Dauermagneten bei veränderlichem Abstand zwischen Sensor und Magnet bestimmt und daraus Rückschlüsse auf diesen Abstand zulässt. Sowohl der Sensor als auch der Permanentmagnet befinden sich im Inneren des Luftfederbalgs. Da jedoch der Sensor und ggf. seine Auswertelektronik elektrisch kontaktiert werden müssen, müssen die elektrischen Anschlüsse pneumatisch abgedichtet durch die Wandung der Luftfeder hindurch geführt werden. Dies bedeutet einen erhöhten technischen Aufwand. Außerdem kann das System durch äußere Magnetfelder sowie durch Veränderung der metallischen Umgebung leicht gestört werden, ohne dass eine Fehlererkennung mit vertretbarem Aufwand möglich ist.

Aus der nach Art. 54(3) EPÜ zum Stand der Technik zählende WO 2006/073717 A1 ist eine für eine Fahrzeug-Luftfeder bestimmte Abstandsbestimmung mit den im Oberbegriff angegebenen Merkmalen bekannt.

**Aufgabe** der vorliegenden Erfindung ist es, ein luftgefedertes Fahrwerk der eingangs genannten Art anzugeben, bei dem die Fahrhöhenbestimmung unanfällig gegenüber äußeren Störeinflüssen arbeitet.

Zur Lösung wird bei einem luftgefederten Fahrwerk der eingangs genannten Art vorgeschlagen, daß der Transponder über die aktive Sensoreinheit drahtlos aus einem magnetischen Wechselfeld mit Energie versorgt wird, daß der Transponder an die aktive Sensoreinheit eine Signalantwort überträgt, und die Sensoreinheit zu deren Empfang das Transponder-Lesemodul enthält und daß die passive Sensoreinheit ihre Antwortinformation an die aktive Sensoreinheit in zwei Frequenzbändern überträgt, die um die Höhe einer Hilfsträgerfrequenz f_{T} nach oben und nach unten verschoben sind.

Die erfindungsgemäße Kombination einer aktiven Sensoreinheit mit einem passiv arbeitenden Transponder ermöglicht eine unanfällig gegenüber äußeren Störeinflüssen arbeitende Fahrhöhenbestimmung an dem Fahrwerk. Die Zahl der mechanisch bewegten Teile ist gering, zudem arbeitet das System verschleißfrei und frei von jeglicher mechanischer Verbindung zwischen der aktiven Sensoreinheit und dem Transponder.

Bevorzugt wird eine Ausgestaltung, bei der der Transponder innerhalb des Druckraums der Luftfeder der Luftfederung, und die aktive Sensoreinheit an dem Fahrzeugchassis angeordnet ist. Konstruktiv günstig ist es, den Transponder an einem bei der Einfederung zumindest teilweise in den Druckraum der Luftfeder hineinragenden Tauchkolben zu befestigen.

Von Vorteil ist es, zusätzlich zu der Primärinformation des Abstandes zwischen Sensoreinheit und Transponder auf der Transponderseite weitere Meßgrößen zu messen, wie etwa die Temperatur, den Druck oder die Beschleunigung. Zu diesem Zweck kann in den Transponder mindestens ein Sensor integriert werden. Der Transponder kann einen Mikroprozessor aufweisen, der die von dem Sensor erfassten Meßwerte in eine Signalantwort überführt, die ebenfalls drahtlos zu der aktiven Sensoreinheit gelangt, um dort ausgewertet und ggf. angezeigt zu werden. Dieser zusätzliche Effekt wird durch Auswertung eines Hilfsträgers erreicht, der um einen Frequenzbetrag um die eigentliche Hauptträgerfrequenz herum nach oben und unten verschoben ist. Werden die Informationen der passiven Sensoreinheit, die neben der Feldstärke der Signalantwort auch die zusätzlichen Meßgrößen-Informationen wie Temperatur und Druck beinhalten, auf die zwei gegenüber der eigentlichen Hauptträgerfrequenz nach oben und unten verschobene Seitenbänder verlagert, so steigt die systemeigene Störsicherheit signifikant. Das eigentlich Nutzsignal kann aufgrund des Abstandes zur Hauptträgerfrequenz vom Trägersignal selbst sehr viel einfacher getrennt werden, wodurch Beeinträchtigungen der Meßergebnisse gering gehalten werden. mindestens ein Sensor integriert werden. Der Transponder kann einen Mikroprozessor aufweisen, der die von dem Sensor erfassten Messwerte in eine Signalantwort überführt, die ebenfalls drahtlos zu der aktiven Sensoreinheit gelangt, um dort ausgewertet und ggf. angezeigt zu werden. Dieser zusätzliche Effekt wird durch Auswertung eines Hilfsträgers erreicht, der um einen Frequenzbetrag um die eigentliche Hauptträgerfrequenz herum nach oben und unten verschoben ist. Werden die Informationen der passiven Sensoreinheit, die neben der Feldstärke der Signalantwort auch die zusätzlichen Messgrößen-Informationen wie Temperatur und Druck beinhalten, auf zwei gegenüber der eigentlichen Hauptträgerfrequenz nach oben und unten verschobene Seitenbänder verlagert, so steigt die systemeigene Störsicherheit signifikant. Das eigentliche Nutzsignal kann aufgrund des Abstandes zur Hauptträgerfrequenz vom Trägersignal selbst sehr viel einfacher getrennt werden, wodurch Beeinträchtigungen der Messergebnisse gering gehalten werden.

Ferner ergibt sich durch die Verteilung der Informationen der Signalantwort eine echte Redundanz des Meßsystems. Wird zum Beispiel eines der Bänder durch eine Störfrequenz beeinträchtigt, so kann dies durch Vergleich mit dem Signal des anderen Bandes nach Art einer Plausibilitätsprüfung leicht entdeckt werden. Wird bei der Fehlerprüfung ein Kommunikationsfehler in einem Band erkannt, bietet die systembedingte Redundanz die Möglichkeit, entweder das andere Frequenzband auszuwerten oder, sollte auch dieses beeinträchtigt sein, aus den Fragmenten beider Bänder einen plausiblen Meßwert zu rekonstruieren.

Zu dem Vorteil der verringerten Störanfälligkeit kommt der Vorteil der zusätzlichen Meßwertinformation hinzu, sei dies nun die Temperatur- oder die Druckinformation. Denn sowohl die Fahrhöhen-Sensierung, als auch der Druck sowie die Temperatur in der Luftfeder sind von besonderer Bedeutung im Rahmen einer elektronischen Fahrwerksregelung. Die erfassten Ist-Größen lassen sich in Verbindung mit einer elektronisch gesteuerten Luftfederung oder einem elektronischen Bremssystem zur Wankstabilisierung und zur Spur- und Kippstabilisierung des Fahrzeuges nutzen.

Weitere Einzelheiten und Vorteile der Erfindung werden nachfolgend unter Zuhilfenahme der beigefügten Zeichnungen erläutert. Darin zeigen
- Fig. 1: in einer ersten Ausführungsform die Seitenansicht einer luftgefederten Fahrzeugachse;
- Fig. 2: eine vergrößerte Schnittansicht im Bereich des Tauchkolbens der Luftfeder;
- Fig. 3: in einer zweiten Ausführungsform die Seitenansicht einer luftgefederten Fahrzeugachse;
- Fig. 4: eine vergrößerte Schnittansicht im Bereich des Tauchkolbens der Luftfeder;
- Fig. 5: in einer dritten Ausführungsform die Seitenansicht einer luftgefederten Fahrzeugachse;
- Fig. 6: eine vergrößerte Schnittansicht im Bereich des Tauchkolbens der Luftfeder;
- Fig. 7: in einer vierten Ausführungsform die Seitenansicht einer luftgefederten Fahrzeugachse;
- Fig. 8: eine vergrößerte Schnittansicht im Bereich des Tauchkolbens der Luftfeder;
- Fig. 9: eine schaltplanmäßige Übersicht einer Abstands-Messvorrichtung;
- Fig. 10: eine schematische Darstellung des zeitlichen Verlaufs einer Anfrage einer aktiven Sensoreinheit und der Antwort eines Transponders und
- Fig. 11: das entsprechende Frequenzspektrum mit Hauptträger und zwei Seitenbändern.

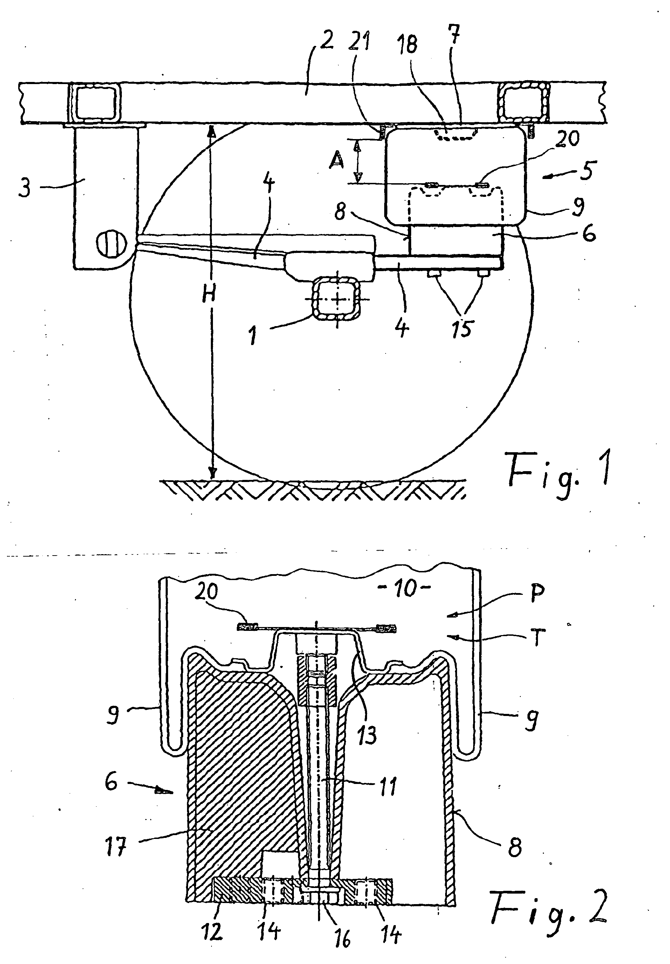

Die Fign. 1 bis 8 zeigen in verschiedenen Ausführungsformen luftgefederte Fahrwerke eines Schwerlast-Anhängerfahrzeuges. Dessen Fahrzeugachse 1 ist über eine zwischen dem Fahrzeugchassis 2 und dem über eine Konsole 3 am Fahrzeugchassis 2 schwenkbeweglich angelenkten Achslenker 4 angeordnete Luftfeder 5 federnd gegenüber dem Chassis 2 abgestützt.

Die Luftfeder 5 bestimmt die Fahrhöhe H des Fahrzeuges. Sie besteht im Prinzip aus einem am Fahrzeugchassis 2 befestigten Deckel 7, einem elastischen Rollbalg 9, und einem am Achslenker 4 oder alternativ auch unmittelbar an der Achse festgelegten Tauchkolben 6. Chassisseitig ist der Rollbalg 9 luftdicht am Deckel 7 befestigt. Der Tauchkolben 6 ist mit seiner als Abrollfläche für den Rollbalg 9 dienenden zylindrischen Mantelfläche 8 teilweise in das Volumen des Rollbalgs 9 eingetaucht, was durch die strichliniert dargestellte Tauchkolbenkontur angedeutet ist. Der Rollbalg 9 erstreckt sich zwischen Deckel 7 und Tauchkolben 6, an dessen Oberseite er über einen Deckel 13 (vgl. Fig. 2) luftdicht festgelegt ist. Der Rollbalg 9 begrenzt in seinem Inneren einen Druckraum 10 mit einem gegenüber dem Umgebungsdruck deutlich erhöhten Druck P sowie einer Innentemperatur T. Bei Reduzierung des Drucks P senkt sich das Fahrzeugchassis 2 in vertikaler Richtung ab, wobei sich die Schwenkstellung des Achslenkers 4 gegenüber dem Fahrzeugchassis 2 ändert. In seiner obersten Endstellung liegt der Tauchkoben 6 an einem an dem Deckel 7 vorgesehenen Gummipuffer 18 an. In diesem - theoretischen - Zustand ist die Fahrhöhe H des Fahrzeugs minimal. Auch beim Beladen des Fahrzeugs kann es durch das Gewicht der Zuladung zu einer Verringerung der Fahrhöhe H kommen. Zum Ausgleich wird der Luftdruck P entsprechend dem Gewicht der Zuladung erhöht.

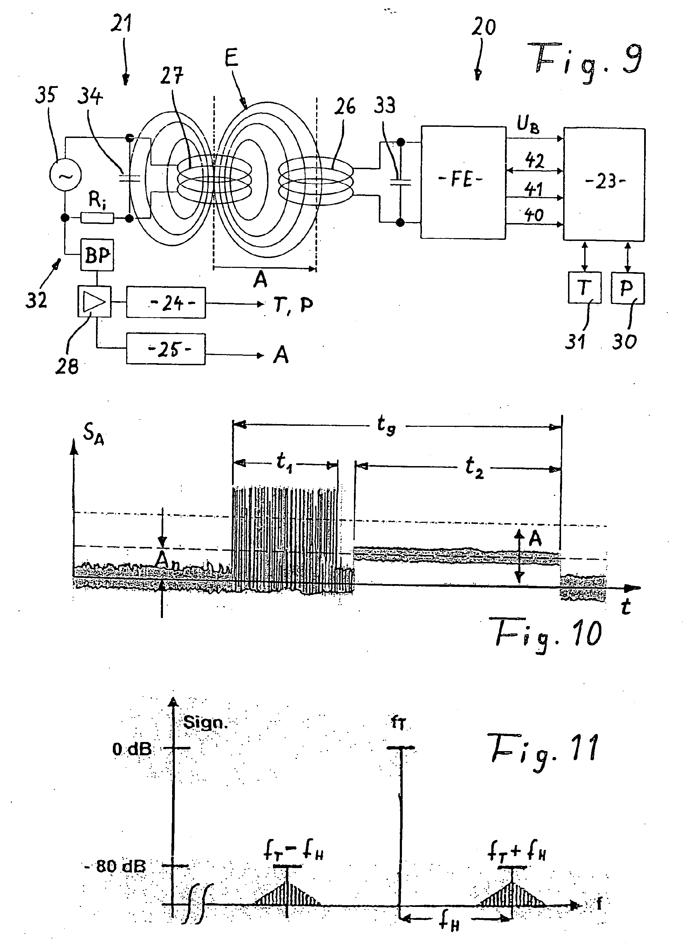

Zur Messung des Abstandes A bei der Einfederung des Tauchkolbens 6 und damit letztlich zur Messung der Fahrhöhe H des Fahrzeugs ist eine Niveau-Meßeinrichtung 19 vorgesehen, die eine passive, d.h. ohne eigene Stromversorgung auskommende Sensoreinheit 20 und ferner eine aktive Sensoreinheit 21 aufweist. Die passive Sensoreinheit 20 ist ein sogenannter Transponder (engl.: "tag"), und ist innerhalb des von der Luftfeder umschlossenen Druckraums 10 angeordnet. Die aktive Sensoreinheit 21 befindet sich außerhalb des Druckraums. Zur Erzeugung eines elektrischen Feldes E (Fig. 9) wird sie über die bordeigenen Strom- bzw. Spannungsversorgungssysteme mit elektrischer Energie versorgt und ist beim Ausführungsbeispiel nach Fig. 1 im Bereich des Deckels 7 der Luftfeder angeordnet. Eine Verkabelung der im Druckraum 10 angeordneten, passiven Einheit 20 ist nicht erforderlich, so dass sich keine Abdichtungsprobleme stellen. Auch Batterien o.ä. eigene Energiequellen sind zum Betrieb des Transponders 20 nicht erforderlich, weshalb dieser nahezu wartungsfrei arbeitet.

Mit seinem der passiven Sensoreinheit 20 gegenüberliegenden Ende ist der Tauchkolben 6 über Befestigungselemente 15 auf dem Achslenker 4 befestigt. Einzelheiten dieser Befestigung lassen sich den Fign. 2, 4, 6 und 8 entnehmen. Zu erkennen ist, dass der aus Kunststoff bestehende Tauchkolben 6 in seinem Inneren mit radialen Stegen 17 zur Versteifung des Tauchkolbenprofils versehen ist. Die Festlegung am Achslenker 4 erfolgt über eine Halteplatte 12, die im unteren Öffnungsbereich des Tauchkolbens 6 über einen Stützkörper 11 gegen die Stege 17 verspannt ist. Am oberen Ende des Stützkörpers 11 ist der Rollbalg 9 über den Deckel 13 druckdicht gegen den Tauchkolben 6 verspannt.

Auf den Deckel 13 ist der beim Ausführungsbeispiel insgesamt ringförmig gestaltete Transponder 20 aufgesetzt, so dass er jederzeit der Bewegung des Tauchkolbens 6 und damit der Bewegung des Fahrwerks relativ zum Fahrzeugchassis 2 folgt.

Neben der in den Ausführungsbeispielen dargestellten Ringform sind selbstverständlich auch andere Geometrien, beispielsweise kubische oder platinenartige Formen des Transponders 20 denkbar.

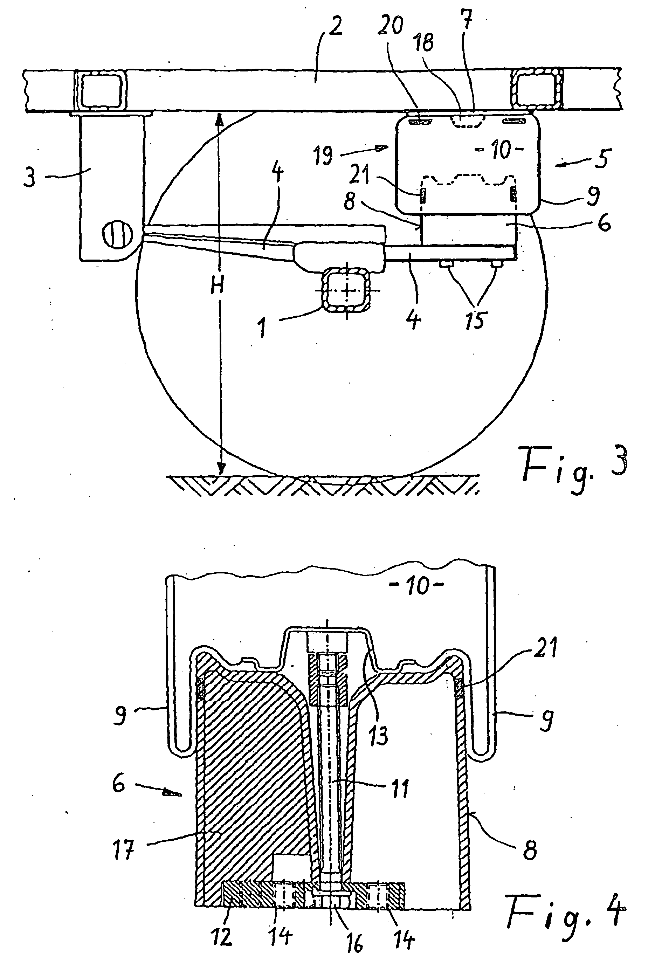

In den Fign. 3 und 4 ist ein weiteres Ausführungsbeispiel für die räumliche Anordnung von aktiver und passiver Sensoreinheit dargestellt. Die aktive Sensoreinheit 21 ist in diesem Fall außen an der Mantelfläche 8 des Tauchkolbens 6, also außerhalb des Druckraums, befestigt. Wiederum befindet sich der Transponder 20 innerhalb des Druckraums 10, hier im oberen Bereich des Rollbalgs 9 nahe des Deckels 7.

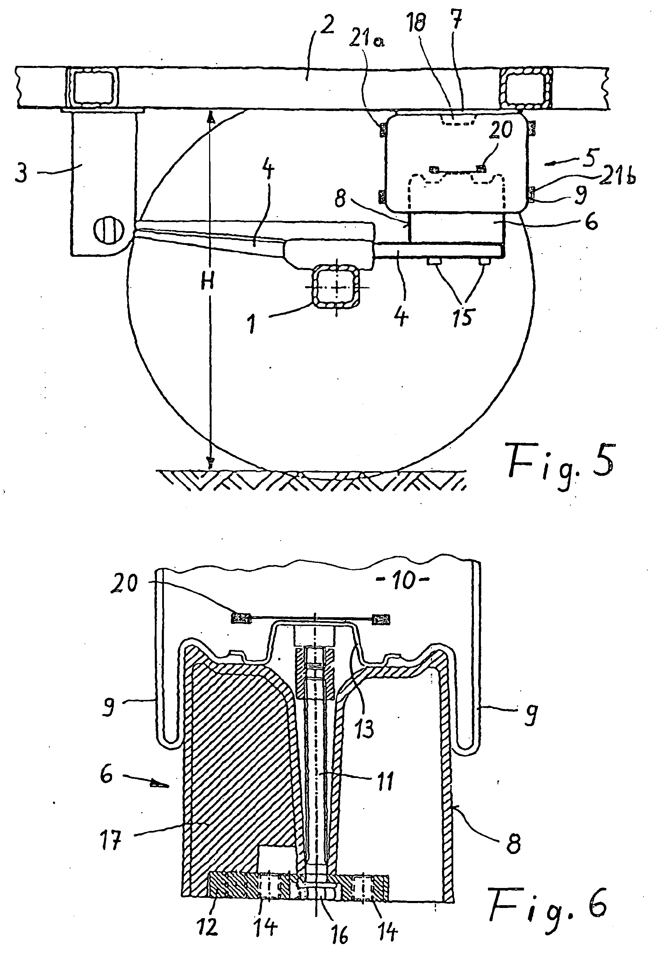

In Fign. 5 und 6 ist ein weiteres Ausführungsbeispiel für die räumliche Anordnung von aktiver und passiver Sensoreinheit dargestellt. Die durch den Transponder gebildete passive Sensoreinheit 20 befindet sich, ebenso wie bei dem Ausführungsbeispiel nach Fig. 2, oben auf dem Tauchkolben 6. Als Besonderheit sind hier zwei aktive Sensoreinheiten 21a, 21 b vorhanden. Diese befinden sich jeweils außerhalb der eigentlichen Luftfeder, etwa auf der Außenseite des Rollbalgs 9. Die Sensoreinheit 21a befindet sich relativ weit oben am Rollbalg, die andere Sensoreinheit 21 b relativ weit unten. Daher befindet sich der Transponder 20 zwischen diesen beiden aktiven Sensoreinheiten 21 a, 21 b, was zu einer erhöhten Meßgenauigkeit führt. Von dem Transponder werden sowohl die abstandsproportionale bzw. digital codierte RSSI-Information, als auch die digital codierte Druck- und Temperaturmeßwerte übertragen.

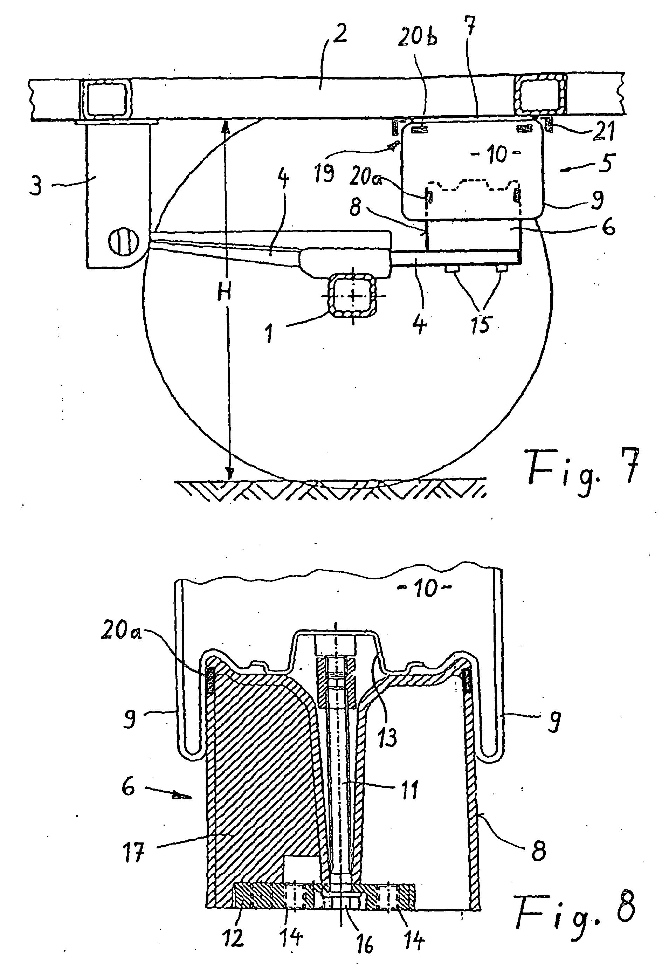

In den Fign. 7 und 8 ist ein weiteres Ausführungsbeispiel für die räumliche Anordnung von aktiver und passiver Sensoreinheit dargestellt. Dieses Ausführungsbeispiel arbeitet mit zwei getrennten, passiven Sensoreinheiten 20a, 20b. Die passive Sensoreinheit 20a dient der Abstandsinformation und ist außen auf der Mantelfläche 8 des Tauchkolbens 6 angeordnet. Die andere passive Sensoreinheit 20b erfasst die Temperatur- und Druckwerte. Sie befindet sich in dem Innenraum 10 geringfügig unterhalb des Deckels 7. Die aktive Sensoreinheit 21 ist an der Unterseite des Fahrzeugchassis 2 befestigt, sie ist auch hier ringförmig gestaltet, und sie umgibt die zweite passive Sensoreinheit 20b.

Fig. 9 zeigt in einer Schaltplandarstellung im linken Teil die aktive Sensoreinheit 21, die über eine Spannungsquelle 35 an die Stromversorgung des Fahrzeugs angeschlossen ist. Die aktive Sensoreinheit 21 ist mit einer Sende- und Empfangseinheit versehen. Dazu bildet eine ringförmige oder spulenförmige Antenne 27 gemeinsam mit einem ohmschen Widerstand des Leitermaterials und einem Kondensator 34 einen Schwingkreis. Die aktive Sensoreinheit 21 erzeugt ein magnetisches Wechselfeld, das bis in den Bereich des im rechten Teil von Fig. 9 dargestellten, die passive Sensoreinheit bildenden Transponders 20 reicht. Dieser ist mit einer ringförmigen oder spulenförmigen Antenne 26 versehen, die in Richtung der aktiven Sensoreinheit 21 ausgerichtet ist. Die Antenne 26 ist über einen parallel geschalteten Kondensator 33 mit dem so genannten Front-End FE des Transponders verbunden. Der Transponder wird aus dem magnetischen Wechselfeld E, das von der aktiven Sensoreinheit 21 generiert wird, über die Antenne 26 mit Energie versorgt. Insoweit handelt es sich bei der passiven Sensoreinheit 20 um eine Empfangseinheit. Mit der aus dem magnetischen Wechselfeld E gewonnenen Energie wird über das Front-End FE ein integrierter Mikroprozessor 23 mit einer Spannung U_{B} versorgt. Darüber hinaus stellt das Front-End FE einen Massekontakt 40 für den Mikroprozessor 23 bereit und gibt dessen Takt 41 vor.

Zwischen dem Front-End FE und dem Mikroprozessor 23 erfolgt ein Austausch von Daten 42. Der Mikroprozessor 23 ist mit einem Sensor 31 zur Sensierung der Temperatur T, und einem weiteren Sensor 30 zur Messung des Drucks P in seiner Umgebung, d.h. in dem Luftraum 10 (Fig. 2) der Luftfeder, versehen. Über die Messung von Temperatur und Druck hinaus können noch weitere Sensoren zur Erfassung weiterer physikalischer oder chemischer Größen integriert werden.

Die Sensordaten werden in digital codierter Form als Signalantwort S_{A} über die Antenne 26 moduliert, z.B. per Lastmodulation, an die aktive Sensoreinheit 21 übertragen. In diesem Fall werden Informationen von dem Transponder 20 an die aktive Sensoreinheit 21 "gesendet". Dies ist allerdings kein Sendevorgang im physikalischen Sinne, da im Sinne der Lastmodulation die passive Sensoreinrichtung 20 lediglich modulierend ihren Zustand ändert, aber physikalisch nichts aussendet. Die passive Sensoreinheit 20 stellt im informationstechnischen Sinne daher eine Informationsquelle, und die aktive Sensoreinrichtung 21 eine Informationssenke dar.

Auch der umgekehrte Fall ist denkbar, dann werden Informationen, z.B. zu Kalibrationszwecken, von der aktiven Sensoreinrichtung 21 an die passive Sensoreinrichtung 20 übertragen.

Die Information über den Abstand A zwischen passiver und aktiver Sensoreinheit bestimmt eine Auswerteelektronik an Hand der Feldstärke der Signalantwort. Mit zunehmendem Abstand der Sensoreinheiten verringert sich die Feldstärke der Signalantwort im Bereich der aktiven Sensoreinheit 21, was für eine zuverlässige Abstandsmeßung genutzt werden kann. Als vorteilhaft hat es sich erwiesen, als Auswerteelektronik zur Bestimmung der Feldstärke einen IC (Integrated Circuit) zu verwenden, der über einen RSSI-Ausgang (Received Signal Strength Indicator) zur Ausgabe der Abstandsinformation verfügt.

Mit zunehmenden Abstand A der Antennen 26,27 der beiden Sensoreinheiten 20,21 reduziert sich die Feldstärke des an der Antenne 26 abgegriffenen Anfragesignals und die Feldstärke der an der Antenne 27 eintreffenden Signalantwort S_{A} . Zur Bestimmung der Feldstärke der Signalantwort S_{A} verfügt die aktive Sensoreinheit 21 über ein Transponder-Lesemodul 32 mit einer entsprechenden Auswertelektronik. Das mittels der Empfangseinheit der Sensoreinheit 21 abgegriffene Signal S_{A} wird in einem Bandpassfilter BP gefiltert und in einem Verstärker 28 verstärkt. Die Generierung der Abstandsinformation A erfolgt in einem Auswertemodul. Dieses verfügt über einen weiteren IC, in dem das abgegriffene, gefilterte und vorverstärkte Signal mit der Hauptträgerfrequenz, vorzugsweise 13,35 MHz, einem Mischer zugeführt wird, dessen Ausgangsignal ein modulierter Hilfsträger ist. Die Signalstärke des so übertragenen Hilfsträgers ist das Maß für den Abstand A zwischen den Antennen 26,27. Dieses Signal ist gültig und kann während der Zeit t₂ ausgewertet werden (Fig. 10). Nur während dieser Zeit t₂ trägt das Ausgangssignal des Mischers also die Information über den Abstand zwischen den Antennen 26, 27. Daraus resultiert die Forderung, dass dieses Signal während dieser Zeit nur eine abstandsmodulierte Amplitude aufweist, und nicht noch weitere, modulierte Informationen beinhaltet. Aus diesem Grund wird die Information vom Transponder 20 zur aktiven Sensoreinheit 21 frequenz- (FM, FSK) oder phasenmoduliert (PM, PSK) übertragen. Demgegenüber würde bei Datenübertragung vom Transponder 20 zu der aktiven Sensoreinheit 21 mittels Amplitudenmodulation (AM, ASK) diese digital codierte Information der abstandsproportionalen Feldstärkeinformation überlagert, was die Qualität der Messung beeinträchtigen würde.

Vorzugsweise wird die Stärke des Hilfsträgersignals, welches die Information über den Abstand der Antennen 26, 27 darstellt, in einem dem Mischer nachgeschalteten weiteren IC verstärkt und gefiltert, der über den logarithmischen sogenannten RSSI-Ausgang (Received Signal Strenth Indicator) verfügt.

Die Trägerfrequenz ist ausreichend hoch gewählt, damit das Zeitfenster für die Signalanfrage t₁ und das Zeitfenster für die Signalantwort t₂ so kurz gehalten werden kann, dass mindestens dreißig Signalanfragen und zugehörige Signalantworten pro Sekunde übertragen werden können. Auf diese Weise sind auch dynamische Abstandswerte, wie sie bei der Fahrwerksregelung auftreten, richtig erfassbar. Die Gesamtzeit t_{g} muss also mindestens kleiner sein als 33,33 Millisekunden.

Alternativ kann die abstandsproportionale Feldstärkeinformation auch innerhalb des Transponders 20 aus dem dort abgegriffenen Anfragesignal gebildet werden. Hierzu muss der Transponder 20 über eine geeignete Auswerteschaltung verfügen, die die Größe der in der Antenne 26 induzierten Spannung messen kann, noch bevor diese von ggf. vorhandenen Begrenzerdioden innerhalb des Front-Ends FE nichtlinear begrenzt wird. In diesem Fall wird die Information über die Größe der gemessenen Antennenspannung dem Mikroprozessor innerhalb der passiven Sensoreinheit 20 übermittelt, der diese in geeigneter Weise codiert und mit den anderen Messdaten, wie z.B. Temperatur, Druck, und weiteren physikalischen und chemischen Messgrößen, an die aktive Sensoreinheit 21 überträgt, z. B. im Wege der Lastmodulation. Auch in diesem Fall wird das Verfahren schnell abgearbeitet, damit mindestens dreißig Abstandswerte pro Sekunde übertragen werden können.

Fig. 11 zeigt das Frequenzspektrum der Signalübertragung. Zu erkennen ist, dass die Übertragung des Antwortsignals S_{A} nicht über die Hauptträgerfrequenz f_{T}, die vorzugsweise 13,56 MHz oder 125 kHz bzw. 133 kHz beträgt, erfolgt, sondern aufgrund der Modulation der Haupträgerfrequenz mit dem seinerseits mit den zu übertragenden Daten modulierten Hilfsträger f_{H} jeweils um +f_{H} und -f_{H} gegenüber der Haupträgerfrequenz verschoben.

Durch die Verteilung der Signalantwort S_{A} bzw. deren Feldstärke sowie der darin enthaltenen Messwert-Informationen auf zwei um jeweils f_{H} gegenüber der Hauptträgerfrequenz f_{T} verschobene Seitenbänder, kann trägerfrequenznahes Rauschen durch die Auswertelektronik des Transpänder-Lesemoduls 32 besser unterdrückt werden bzw. entsteht ein derartiges Rauschen erst gar nicht. Auch liegt die zu übertragende Information nicht in einem der ISM-Bänder, die weltweit für die kommerzielle Nutzung freigegeben sind, so dass in der Praxis weniger Störungen auftreten.

Indem die in der abstandsproportionalen Feldstärke enthaltene Meßwert-Information sowohl im oberen als auch im unteren Frequenzband vorhanden ist, ergibt sich eine systembedingt redundante Übertragung, die von der Auswertelektronik zur Fehlererkennung und zur Fehlerkorrektur genutzt werden kann. Sollte z.B. in einem der beiden Bänder eine Störfrequenz die Übertragung zwischen den beiden Sensoreinheiten 20,21 beeinträchtigen, so kann die Auswertelektronik des Transponder.Lesemoduls dies erkennen und darauf hin entweder das entsprechende anderen Frequenzband zur Auswertung heranziehen, oder, falls dieses auch gestört sein sollte, aus den Fragmenten der in beiden Frequenzbändern übertragenen Daten die Feldstärkeinformationen korrekt rekonstruieren, z.B. durch Anwendung des sogenannten ISB-Receiverprinzips (Independent Sideband Receiver). Zur Prüfung der Datenübertragung kann dazu einerseits im Sinne einer Plausibilitätsprüfung eine Vergleich zwischen den Signalen beider Frequenzbänder, oder aber ein sequentielles, zyklisches Fehler-Erkennungsverfahren durchgeführt werden, z.B. ein CRC-Check (Cyclic Redundancy Check).

Darüber hinaus läßt sich die passive Sensoreinheit 20 auch mit einem Oberflächenwellentransponder realisieren. Dieser antwortet bei Anregung durch einen hochfrequenten Impuls des Lesegerätes je nach Temperatur-, Druck- und Abstandsmesswerten mit Änderungen in Signallaufzeit, -frequenz und/oder -phasenlage. Diese Änderungen lassen sich dann vom Lesegerät auswerten.

**Bezugszeichen:**

| | |
|---|---|
| 1 | Fahrzeugachse |
| 2 | Fahrzeugchassis |
| 3 | Konsole |
| 4 | Achslenker |
| 5 | Luftfeder |
| 6 | Tauchkolben |
| 7 | Deckel |
| 8 | Mantelfläche |
| 9 | Rollbalg |
| 10 | Druckraum |
| 11 | Stützkörper |
| 12 | Halteplatte |
| 13 | Deckel |
| 14 | Gewindebohrung |
| 15 | Schraube |
| 16 | Kopf |
| 17 | Steg |
| 18 | Gummipuffer |
| 19 | Niveau-Meßeinrichtung |
| 20 | passive Sensoreinheit, Transponder |
| 20a | passive Sensoreinheit, Transponder |
| 20b | passive Sensoreinheit, Tranpsonder |
| 21 | aktive Sensoreinheit |
| 21a | aktive Sensoreinheit |
| 21b | aktive Sensoreinheit |
| 22 | Dämpfungselement |
| 23 | Mikroprozessor |
| 24 | Ausgang, Demodulator |
| 25 | Ausgang RSSI-Ausgang |
| 26 | Antenne |
| 27 | Antenne |
| 28 | Verstärker |
| 30 | Sensor, Drucksensor |
| 31 | Sensor, Temperatursensor |
| 32 | Transponder-Lesemodul |
| 33 | Kondensator |
| 34 | Kondensator |
| 35 | Spannungsquelle |
| 40 | Masse |
| 41 | Takt |
| 42 | Daten |
| | |
| H | Fahrhöhe des Fahrzeuges |
| A | Abstand |
| P | Druck |
| T | Temperatur |
| S_{A} | Signalantwort |
| BP | Bandpassfilterung |
| E | elektromagnetisches Wechselfeld |
| U_{B} | Betriebsspannung |
| Rᵢ | Widerstand |
| FE | Front-End |
| f | Frequenz, Sendefrequenz |
| f_{T} | Hauptträgerfrequenz |
| f_{H} | Hilfträgerfrequenz |
| | |
| t₁ | Zeit |
| t₂ | Zeit |
| t_{g} | Gesamtzeit |

## Patentansprüche

1. Luftgefedertes Fahrwerk mit einem eine Fahrzeugachse (1) führenden, gegenüber einem Fahrzeugchassis angelenkten Achslenker (4), sowie einer aus mindestens einer aktiven Sensoreinheit (21) und einem passiven Element (20) zusammengesetzten Niveau-Messeinrichtung (19) zur Bestimmung eines Abstandes (A) zwischen Fahrwerk und Fahrzeugchassis, wobei entweder das passive Element (20) an dem Fahrwerk und die aktive Sensoreinheit (21) an dem Fahrzeugchassis oder umgekehrt, angeordnet ist, das passive Element ein im magnetischen Feld der aktiven Sensoreinheit (21) angeordneter und aus diesem mit Energie versorgter Transponder (20) ist, und die Sensoreinheit (21) umfasst:
- ein Transponder-Lesemodul (32) zur Bestimmung der Feldstärke, mit der der Transponder (20) auf eine Anfrage der aktiven Sensoreinheit (21) antwortet oder mit der die Anfrage der aktiven Sensoreinheit (21) bei dem Transponder (20) ankommt,
- ein Auswertemodul zur Generierung einer Abstandsinformation aus der von dem Transponder-Lesemodul (32) empfangenen Feldstärke,
**dadurch gekennzeichnet, dass** der Transponder (20) über die aktive Sensoreinheit (21) drahtlos aus einem magnetischen Wechselfeld (E) mit Energie versorgt wird, dass der Transponder (20) an die aktive Sensoreinheit (21) eine Signalantwort (S_{A}) überträgt, und die Sensoreinheit (21) zu deren Empfang das Transponder-Lesemodul (32) enthält und dass die passive Sensoreinheit (20) ihre Antwortinformation an die aktive Sensoreinheit (21) in zwei Frequenzbändern überträgt, die um die Höhe einer Hilfsträgerfrequenz f_{T} nach oben und nach unten verschoben sind.

2. Fahrwerk nach Anspruch 1, **dadurch gekennzeichnet, dass** der Transponder (20) innerhalb des Druckraums (10) der Luftfeder (5), und die aktive Sensoreinheit (21) an dem Fahrzeugchassis (2) angeordnet ist.

3. Fahrwerk nach Anspruch 1 oder 2, **dadurch gekennzeichnet, dass** der Transponder (20) an einem im Fahrbetrieb zumindest teilweise in den Druckraum (10) der Luftfeder hineinragenden Tauchkolben (6) befestigt ist.

4. Fahrwerk nach einem der vorangehenden Ansprüche, **gekennzeichnet durch** zwei chassisfest und im Abstand zueinander angeordnete aktive Sensoreinheiten (21a, 21b), zwischen denen sich der Transponder (20) befindet.

5. Fahrwerk nach einem der vorangehenden Ansprüche, **dadurch gekennzeichnet, dass** der Transponder (20) mit mindestens einem Sensor (30, 31) versehen ist.

6. Fahrwerk nach Anspruch 5, **dadurch gekennzeichnet, dass** der Transponder (20) einen Mikroprozessor (23) aufweist, der die von dem Sensor (30, 31) erfassten Meßwerte in eine Signalantwort (S_{A}) überführt, die drahtlos an die aktive Sensoreinheit (21) übertragbar ist.

7. Fahrwerk nach Anspruch 5 oder 6, **dadurch gekennzeichnet, dass** der Sensor ein Temperatur-, Druck- oder Beschleunigungssensor ist.

8. Fahrwerk nach Anspruch 1, **dadurch gekennzeichnet, dass** der Transponder (20) und die aktive Sensoreinheit (21) ein Schreib-/Lesemodul enthalten, so dass Meßdaten sowohl von dem Transponder (20) zur aktiven Sensoreinheit (21), als auch von der aktiven Sensoreinheit (21) zu dem Transponder (20) übertragbar sind.

9. Fahrwerk nach einem der vorangehenden Ansprüche, **dadurch gekennzeichnet, dass** eine erste passive Sensoreinheit (20a) am Tauchkolben (6) ausserhalb des Druckraumes (10), und eine zweite passive Sensoreinheit (20b) am Deckel (7) innerhalb des Druckraumes (10), befestigt ist, wobei von der ersten passiven Sensoreinheit (20a) die abstandsproportionale bzw. digital codierte RSSI-Information, und von der anderen passiven Sensoreinheit (20b) digital codierte Druck- und Temperaturmesswerte übertragen werden.

10. Fahrwerk nach einem der Ansprüche 1 bis 8, **dadurch gekennzeichnet, dass** zwei aktive Sensoreinheiten (21a und 21b) am Rollbalg (9) ausserhalb des Druckraumes (10) angebracht sind und die passive Sensoreinheit (20) innerhalb des Druckraumes (10) befestigt ist, wobei von der passiven Sensoreinheit (20) sowohl die abstandsproportionale bzw. digital codierte RSSI-Information, als auch digital codierte Druck- und Temperaturmesswerte übertragen werden.

11. Fahrwerk nach einem der vorangehenden Ansprüche, **dadurch gekennzeichnet, dass** die passive Sensoreinheit (20) ein Oberflächenwellentransponder ist, der bei Anregung durch einen hochfrequenten Impuls des Lesegerätes je nach Temperatur-, Druck- und Abstandsmesswerten mit Änderungen in Signallaufzeit, -frequenz und/oder - phasenlage antwortet, die vom Lesegerät ausgewertet werden.

## Claims

1. An air-sprung suspension with an axle link (4) guiding a vehicle axle (1) and articulated with respect to a vehicle chassis, and a level measurement device (19) formed from at least one active sensor unit (21) and one passive element (20) for determining a distance (A) between the suspension and the vehicle chassis, wherein either the passive element (20) is arranged on the suspension and the active sensor unit (21) is arranged on the vehicle chassis or *vice versa,* the passive element is a transponder (20) arranged in the magnetic field of the active sensor unit (21) and supplied with energy from the latter, and the sensor unit (21) comprises:
- a transponder reading module (32) for determining the field strength, by which the transponder (20) responds to an enquiry of the active sensor unit (21) or by which the enquiry of the active sensor unit (21) arrives at the transponder (20),
- an evaluation module for generating distance information from the field strength received by the transponder reading module (32),
**characterized in that** the transponder (20) is supplied wirelessly with energy from an alternating magnetic field (E) by way of the active sensor unit (21), the transponder (20) transmits a signal response (S_{A}) to the active sensor unit (21), and the sensor unit (21) contains the transponder reading module (32) for receiving the aforesaid signal response (S_{A}), and the passive sensor unit (20) transmits its response information to the active sensor unit (21) in two frequency bands which are shifted upwards and downwards by the height of an auxiliary carrier frequency f_{T}.

2. A suspension according to Claim 1, **characterized in that** the transponder (20) is arranged inside the pressure chamber (10) of the air spring (5), and the active sensor unit (21) is arranged on the vehicle chassis (2).

3. A suspension according to Claim 1 or 2, **characterized in that** the transponder (20) is fastened to a plunger (6) projecting into the pressure chamber (10) of the air spring at least in part during travel.

4. A suspension according to any one of the preceding Claims, **characterized by** two active sensor units (21 a, 21 b) which are arranged in a fixed manner with respect to the chassis and at a distance from each other and between which the transponder (20) is situated.

5. A suspension according to any one of the preceding Claims, **characterized in that** the transponder (20) is provided with at least one sensor (30, 31).

6. A suspension according to Claim 5, **characterized in that** the transponder (20) has a microprocessor (23) which converts the measurement figures detected by the sensor (30, 31) into a signal response (S_{A}) which is capable of being transmitted wirelessly to the active sensor unit (21).

7. A suspension according to Claim 5 or 6, **characterized in that** the sensor is a temperature, pressure or acceleration sensor.

8. A suspension according to Claim 1, **characterized in that** the transponder (20) and the active sensor unit (21) contain a writing / reading module, so that measurement data are capable of being transmitted both from the transponder (20) to the active sensor unit (21) and from the active sensor unit (21) to the transponder (20).

9. A suspension according to any one of the preceding Claims, **characterized in that** a first passive sensor unit (20a) is fastened to the plunger (6) outside the pressure chamber (10), and a second passive sensor unit (20b) is fastened to the cover (7) inside the pressure chamber (10), wherein the distance-proportional or digitally encoded RSSI information is transmitted from the first passive sensor unit (20a), and digitally encoded pressure and temperature measurement figures are transmitted from the other passive sensor unit (20b).

10. A suspension according to any one of Claims 1 to 8, **characterized in that** two active sensor units (21a and 21 b) are attached to the rolling lobe (9) outside the pressure chamber (10), and the passive sensor unit (20) is fastened inside the pressure chamber (10), wherein both the distance-proportional or digitally encoded RSSI information and digitally encoded pressure and temperature measurement figures are transmitted from the passive sensor unit (20).

11. A suspension according to any one of the preceding Claims, **characterized in that** the passive sensor unit (20) is a surface wave transponder which responds in the case of excitation by a high-frequency pulse of the reading appliance in a manner dependent upon temperature, pressure and distance measurement figures with changes in the signal run time, frequency and/or phase position, which are evaluated by the reading appliance.

## Revendications

1. Suspension pneumatique comprenant un guide d'essieu (4) guidant un essieu de véhicule (1), articulé par rapport à un châssis du véhicule, ainsi qu'un dispositif de mesure de niveau (19) composé d'au moins une unité active de capteur (21) et un élément passif (20) destiné à déterminer une distance (A) entre la suspension et le châssis du véhicule, étant entendu que l'élément passif (20) est agencé sur la suspension et l'unité active de capteur (21) sur le châssis du véhicule ou inversement, que l'élément passif est un transpondeur (20) agencé dans le champ magnétique de l'unité active de capteur (21) et alimenté en énergie à partir de celle-ci et que l'unité de capteur (21) comprend :
- un module de lecture (32) du transpondeur destiné à déterminer l'intensité de champ avec laquelle le transpondeur (20) répond à une demande de l'unité active de capteur (21) ou avec laquelle la demande de l'unité active de capteur (21) arrive au transpondeur (20),
- un module d'analyse destiné à produire une information de distance à partir de l'intensité de champ reçue par le module de lecture (32) du transpondeur,
**caractérisée en ce que** le transpondeur (20) est alimenté en énergie sans fil au moyen de l'unité active de capteur (21) à partir d'un champ alternatif magnétique (E), **en ce que** le transpondeur (20) transmet un signal de réponse (SA) à l'unité active de capteur (21) et l'unité de capteur (21) comprend le module de lecture (32) du transpondeur aux fins de sa réception, et **en ce que** l'unité passive de capteur (20) transmet son information de réponse à l'unité active de capteur (21) dans deux bandes de fréquence qui sont décalées vers le haut et vers le bas de la hauteur d'une fréquence sous-porteuse f_{T}.

2. Suspension selon la revendication 1, **caractérisée en ce que** le transpondeur (20) est agencé à l'intérieur de la chambre de refoulement (10) des ressorts pneumatiques (5) et l'unité active de capteur (21) sur le châssis du véhicule (2).

3. Suspension selon la revendication 1 ou 2, **caractérisée en ce que** le transpondeur (20) est fixé sur une tige de commande (6) qui pénètre au moins partiellement dans la chambre de refoulement (10) des ressorts pneumatiques pendant l'utilisation en circulation.

4. Suspension selon l'une des revendications précédentes, **caractérisée par** deux unités actives de capteur (21a, 21b) agencées en position fixe sur le châssis et à distance l'une de l'autre, entre lesquelles se trouve le transponder (20).

5. Suspension selon l'une des revendications précédentes, **caractérisée en ce que** le transpondeur (20) est muni d'au moins un capteur (30, 31).

6. Suspension selon la revendication 5, **caractérisée en ce que** le transpondeur (20) présente un microprocesseur (23) qui transpose les valeurs de mesure saisies par le capteur (30, 31) dans un signal de réponse (S_{A}) qui peut être transmis sans fil à l'unité active de capteur (21).

7. Suspension selon la revendication 5 ou 6, **caractérisée en ce que** le capteur est un capteur de température, de pression ou d'accélération.

8. Suspension selon la revendication 1, **caractérisée en ce que** le transpondeur (20) et l'unité active de capteur (21) comprennent un module d'écriture/de lecture de sorte que des données de mesure peuvent être transmisses aussi bien depuis le transpondeur (20) vers l'unité active de capteur (21) que depuis l'unité active de capteur (21) vers le transpondeur (20).

9. Suspension selon l'une des revendications précédentes, **caractérisée en ce qu'**une première unité passive de capteur (20a) est fixée sur la tige de commande (6) à l'extérieur de la chambre de refoulement (10) et une deuxième unité passive de capteur (20b) est fixée sur le couvercle (7) à l'intérieur de la chambre de refoulement (10), étant entendu que des informations RSSI proportionnelles à la distance ou codées numériquement sont transmises par la première unité passive de capteur (20a) et des valeurs de mesure de la pression ou de la température codées numériquement sont transmises par l'autre unité passive de capteur (20b).

10. Suspension selon l'une des revendications 1 à 8, **caractérisée en ce que** deux unités actives de capteur (21a et 21b) sont installées sur le soufflet de suspension (9) à l'extérieur de la chambre de refoulement (10) et l'unité passive de capteur (20) est fixée à l'intérieur de la chambre de refoulement (10), étant entendu qu'à la fois des informations RSSI proportionnelles à la distance ou codées numériquement et des valeurs de mesure de la pression ou de la température cotées numériquement sont transmises par l'unité passive de capteur (20).

11. Suspension selon l'une des revendications précédentes, **caractérisée en ce que** l'unité passive de capteur (20) est un transpondeur à ondes de surface qui, lorsqu'il est excité au moyen d'une impulsion à haute fréquence de l'appareil de lecture, répond, en fonction des valeurs de mesure de la température, de la pression et de la distance, par des changements dans la durée, la fréquence et/ou la relation de phase du signal qui sont analysés par l'appareil de lecture.
